# EUROPEAN PATENT SPECIFICATION

(11) **EP 1 778 062 B1**
(45) Date of publication and mention of the grant of the patent: **22.04.2009**
(21) Application number: 05758467.4
(22) Date of filing: 01.07.2005
(51) Int. Cl.: A47J 31/40, B65D 81/00

(54) **COFFEE MAKER COMPRISING MEANS FOR CREATING TURBULENCE IN A COFFEE FLOW**
KAFFEEMASCHINE MIT VORRICHTUNG ZUR ERZEUGUNG VON WIRBELN BEIM KAFFEEAUSLAUF
MACHINE A CAFE COMPRENANT DES MOYENS PERMETTANT DE CREER UNE TURBULENCE DANS UN FLUX DE CAFE

(30) Priority: 07.07.2004 EP 04103214
(43) Date of publication of application: 02.05.2007
(73) Proprietor: Koninklijke Philips Electronics N.V., 5621 BA Eindhoven (NL)
(72) Inventor: NOORDHUIS, Joeke, NL-5656 AA Eindhoven (NL)
(74) Representative: Schouten, Marcus Maria
(86) International application number: PCT/IB2005/052199
(87) International publication number: WO 2006/006112

(56) References cited:
- EP-A- 1 243 210
- EP-A- 1 371 311
- WO-A-03/059778
- WO-A-20/04023948
- WO-A-20/05063089
- DE-A1- 10 247 573

## Description

The present invention is in the field of a method for making and conditioning a hot beverage such as coffee on the basis of hot water and extractable material, comprising the following steps: forcing hot water under pressure through containing means in which a quantity of the extractable material is present, whereby the hot beverage is obtained; and feeding the hot beverage to a nozzle for obtaining a hot beverage jet.

Such a method is well-known in practice, and many types of devices have been developed for carrying out the method. For instance, a coffee maker has been developed, which comprises a brew chamber in which the coffee is actually made. In case a user desires to obtain a quantity of coffee, he places a coffee pad comprising an envelope filled with a quantity of ground coffee beans in the brew chamber. During operation of the coffee maker, a quantity of water is forced to flow through the coffee pad. In the process, the envelope acts as a filter. In this way, on the basis of the interaction between the pressurized water and the coffee pad inside the brew chamber, a desired quantity of coffee is obtained.

For the purpose of heating the water to a predetermined temperature, the coffee maker comprises a boiler having a container for containing the water and heating means for heating the water. For the purpose of pressurizing the water, the coffee maker comprises a pump. The pump, the boiler and the brew chamber are interconnected by means of tubes for transporting water.

In a specific embodiment of the above-described coffee maker, for example an embodiment as described in European Patent no. 0 904 717, the brew chamber comprises two parts, i.e. a container and a cover, wherein the container is removably arranged. A bottom of the container is bowl-shaped, such that the container is capable of receiving and supporting a coffee pad. As a result of this design of the coffee maker and the removably arranged container, it is very easy for a user to prepare the coffee maker for a coffee making procedure. All that the user needs to do is remove the container from the coffee maker, place the coffee pad on the bottom of the container, and insert the container and the coffee pad in the coffee maker. In the coffee maker, the container is covered by the cover, whereby the closed brew chamber is obtained, in which the process of forcing hot water through the coffee pad takes place during operation of the coffee maker.

For the purpose of letting in the hot water in the brew chamber, an inlet hole is arranged in the cover. For the purpose of discharging the coffee from the brew chamber, a nozzle is arranged at the bottom of the container. Furthermore, in the bottom of the container, grooves are provided. According to one known possibility, the bottom is provided with a number of vertical projections arranged at regular distances relative to each other, wherein the grooves are formed by the interspaces present between the vertical projections.

The vertical projections are substantially of a cylindrical design. Due to the presence of the vertical projections, turbulence in a coffee flow directed towards the nozzle is prevented, so that it is possible to obtain a subtle cream-like foam layer on the coffee when it is received in a cup or the like.

WO 2004/023948 discloses a pad support for a beverage maker, comprising a plurality of pad support projections, wherein at least some of an innermost plurality of the pad support projections, i.e. a plurality which is positioned closest to a discharge opening of the pad support, have a cross-section that is elongate in a radial direction with respect to the discharge opening. This allows the innermost ones of the pad support projections to be positioned closer to the discharge opening, and thus to provide better support for a coffee pad in the area of the discharge opening than would be possible if the innermost ones of the pad support projections were to have a round cross-section, without causing turbulence in the coffee extract flow directly upstream of the nozzle, at least to an extent such that the delicacy and performance of the obtained foam suffers.

In case of some coffee variants, there is a need for obtaining a larger foam layer with relatively large bubbles. An example of such a coffee variant is cappuccino. The present invention proposes a method for making and conditioning a hot beverage, which is suitable to be applied in case a larger foam layer is desired. Besides the steps of forcing hot water under pressure through containing means in which a quantity of the extractable material is present, whereby the hot beverage is obtained; and feeding the hot beverage to a nozzle for obtaining a hot beverage jet, the method according to the present invention comprises a step of forcing the hot beverage under pressure to flow around turbulence generating means adapted to generating turbulence in a fluid flow, before entering the nozzle. In particular, according to the present invention, a device for making and conditioning a hot beverage according to claim 1 is provided.

The present invention is based on the insight that the characteristics of the foam layer on the hot beverage are determined by a roughness of the hot beverage jet, and that the roughness of the jet largely depends on a turbulence level of a flow of hot beverage before this flow enters the nozzle. In general, a rougher jet leads to a larger foam layer having relatively large bubbles, and a rougher jet is obtained by letting the flow in the vicinity of the nozzle be more turbulent.

According to the present invention, for the purpose of generating turbulence in a flow of hot beverage that is about to enter the nozzle, the hot beverage is forced to flow around turbulence, generating means adapted to generating turbulence in a fluid flow. In particular, the turbulence generating means comprise barriers suitable for interrupting a fluid flow and a disc-shaped closed top, wherein the barriers extend from the top like pillars from a roof.

The turbulence generating means may be part of a device for making the hot beverage. In that case, the turbulence generating means are positioned in the brew chamber of the device, in the vicinity of an entrance of the nozzle. However, the turbulence generating means may also be part of the containing means in which a quantity of the extractable material is present. This option offers important advantages. For example, in case of the device for making a hot beverage being the known coffee maker as described in the foregoing, the container comprises vertical projections aimed at maintaining a smooth coffee flow. When the turbulence generating means are attached to the coffee pads used in combination with the coffee maker, there is no need for changing the design of the coffee maker in order to obtain a larger foam layer on the coffee. Despite of the presence of the vertical projections, which act as turbulence preventing means, it is possible to generate a turbulent flow, as long as the fluid is forced to flow around the turbulence generating means after the fluid has passed the vertical projections. It is understood that it is important that the position of the turbulence generating means on the coffee pad is chosen such that the turbulence generating means are positioned in the vicinity of the entrance of the nozzle when the coffee pad is placed in the coffee maker. In the known coffee maker, an outlet hole giving access to the nozzle is provided in a recessed central portion of the bottom of the container, so that the desired position of the turbulence generating means is realized when the turbulence generating means have a central position on the coffee pad. In case the turbulence generating means are shaped such as to partially fit in the recessed central portion of the bottom, the turbulence generating means do not only play a role in generating turbulence in the coffee flow, but also have a function of centering the coffee pad in the container. This is an additional advantage, as leakage may occur when the coffee pad is not properly positioned in the container.

The present invention will now be explained in greater detail with reference to the figures, in which similar parts are indicated by the same reference signs, and in which:
Fig. 1 is a block diagram showing various components of a coffee maker according to the present invention;
Fig. 2 diagrammatically shows a side view of a cross-section of a brew chamber and a nozzle of the coffee maker according to the present invention, and of a coffee pad accommodated inside the brew chamber;
Fig. 3 diagrammatically shows a top view of a container, which is part of the brew chamber shown in figure 2;
Fig. 4 diagrammatically shows a perspective view of a detail of the container shown in figure 3;
Fig. 5 diagrammatically shows a perspective view of a detail of a cross-section of the container shown in figure 3 and a nozzle attached to the container;
Fig. 6 is a perspective view of a turbulence generator, which is part of the container shown in figure 3;
Fig. 7 diagrammatically shows a side view of a cross-section of a coffee pad according to the present invention; and
Fig. 8 diagrammatically shows a bottom view of the coffee pad shown in figure 7.

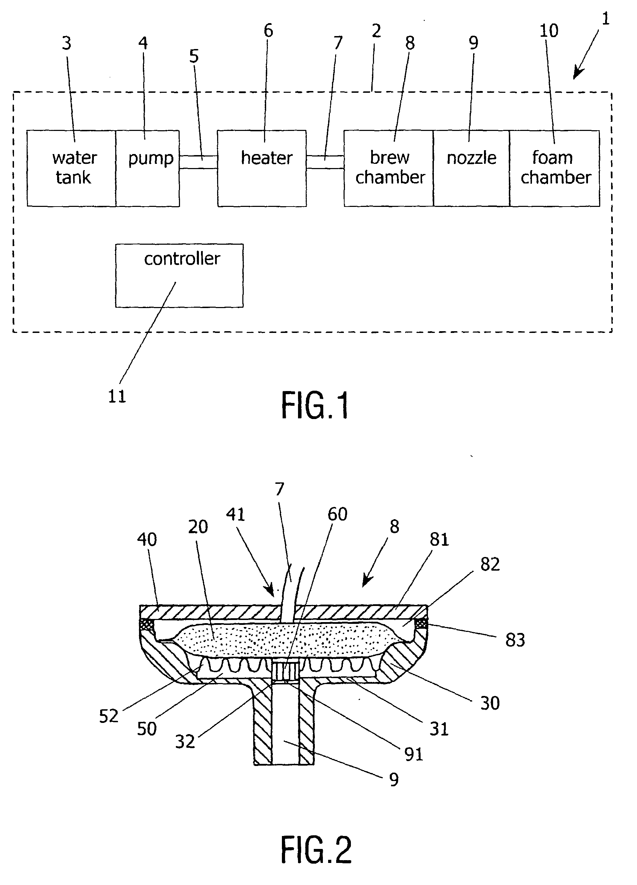

Figure 1 diagrammatically shows various components of a coffee maker 1 according to the present invention. This coffee maker 1 is to be regarded as an arbitrary example of a device for making and conditioning a hot beverage.

A first shown component of the coffee maker 1 is a housing 2 for accommodating most of the components of the coffee maker 1.

A second shown component of the coffee maker 1 is a water tank 3 for containing water. This water tank 3 may be shaped in any suitable way. Preferably, the water tank 3 is detachably arranged, so that the user is capable of bringing the water tank 3 to a tap or the like in order to fill the water tank 3, without having to move the entire coffee maker 1. The present invention is also applicable in the context of coffee makers which do not comprise a water tank, but which are connected to some kind of water supplying system through a suitable closing device, such as a tap.

A third shown component of the coffee maker 1 is a pump 4 for forcing the water to flow through the coffee maker 1, wherein the pump 4 may be of any suitable type.

A fourth shown component of the coffee maker 1 is a heater 6 for heating the water, which may be a boiler, a flow-through heater or another suitable heater. The heater 6 and the pump 4 are interconnected by means of a pump tube 5. When the pump 4 is operated, the water is forced to flow from the pump 4 to the heater 6, through the pump tube 5.

A fifth shown component of the coffee maker 1 is a brew chamber 8. The brew chamber 8 and the heater 6 are interconnected by means of a heater tube 7. The brew chamber 8 is adapted to accommodating at least one coffee pad. During operation, the actual process of making coffee takes place inside the brew chamber 8, as in the brew chamber 8, the water is forced to flow through the coffee pad.

A sixth shown component of the coffee maker 1 is a nozzle 9, which is directly connected to the brew chamber 8, and which serves for letting out a jet of freshly brewed coffee from the brew chamber 8.

A seventh shown component of the coffee maker 1 is a foam chamber 10, in which the freshly brewed coffee is received, and in which bubbles are formed in the coffee as a result of a collision of the coffee jet and a wall of the foam chamber 10.

An eighth shown component of the coffee maker 1 is a controller 11, which is arranged such as to receive signals corresponding to the state of various components of the coffee maker 1, for example input means (not shown) which are operable by a user, which is adapted to processing these signals according to a predetermined schedule, and which is adapted to controlling the operation of operable components, for example the pump 4.

When a user decides to apply the coffee maker 1 to make coffee, he needs to place at least one coffee pad comprising an envelope filled with a quantity of ground coffee beans in the brew chamber 8. A diagrammatical side view of a cross-section of the brew chamber 8 and a coffee pad 20 accommodated inside the brew chamber 8 is shown in figure 2.

The brew chamber 8 comprises a brew chamber casing 81 enclosing a brew chamber space 82. The brew chamber casing 81 comprises two portions, i.e. a bowl-shaped container 30 and a cover 40. In an operational orientation, which is the orientation as shown in figure 2, the coffee pad 20 is supported by the container 30, and the cover 40 is positioned on top of the container 30, such that the brew chamber space 82 in which the coffee pad 20 is present is completely sealed. For the purpose of preventing leakage from the brew chamber 8 during operation of the coffee maker 1, a sealing ring 83 is arranged at a periphery of the cover 40. When the brew chamber 8 is closed, the sealing ring 83 is present at the place where the container 30 and the cover 40 meet.

During operation of the coffee maker 1, hot water is transported from the heater 6 to the brew chamber 8 through the heater tube 7. In figure 2, an end portion of the heater tube 7 is shown. The heater tube 7 extends through an inlet hole 41 that is arranged in the cover 40, so that the hot water can be supplied to the brew chamber space 82 in which the coffee pad 20 is present.

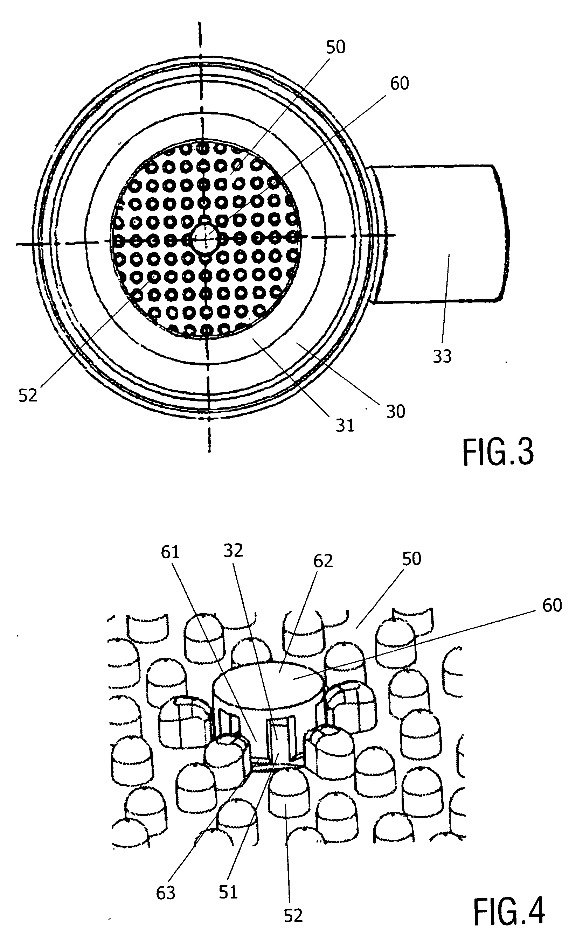

At the outside of a bottom 31 of the container 30, the nozzle 9 for obtaining a coffee jet is arranged. A relatively small outlet hole 91 providing access to the nozzle 9 is arranged in a recessed central portion 32 of the bottom 31 of the container 30. An inner surface of the bottom 31 of the container 30, with the exception of the recessed central portion 32, is covered by a stud plate 50, which has a central hole 51 for leaving the recessed central portion 32 uncovered. The stud plate 50 comprises a number of studs 52, which are arranged according to a predetermined pattern. Important functions of the studs 52 are supporting the coffee pad 20 and ensuring that there is space for a flow of coffee underneath the coffee pad 20, towards the outlet hole 91. The studs 52 are substantially of a cylindrical design, such that the presence of the studs 52 hinders the flow of coffee towards the outlet hole 91 as little as possible. Studs 52 which are positioned closest to the outlet hole 91 even have a drop-shaped cross-section. An overall impression of the stud plate 50 is provided by figure 3, in which a top view of the container 30 is shown. Details of the geometry of the studs 52 are disclosed by figure 4, in which a perspective view of a detail of the container 30 is diagrammatically shown.

The whole of container 30 and the nozzle 9 attached to the container 30 is removably arranged in the housing 2 of the coffee maker 1. A handle 33 is attached to a periphery of the container 30 for facilitating the handling of the container 30 by a user. When the user wants to place a coffee pad 20 inside the brew chamber 8, he removes the container 30, places the coffee pad 20 in the container 30, and puts the container 30 back in place in the coffee maker 1. In order to provide enough space for convenient removal and insertion of the container 30, the cover 40 may be pivotably attached to the housing 2, such that the user is enabled to swing the cover 40 aside.

According to the present invention, a turbulence generator 60, capable of generating turbulence in a fluid flow, is provided. The turbulence generator 60 comprises a number of barriers 61 and a disc-shaped closed top 62, wherein the barriers 61 extend from the top 62 like pillars from a roof. A cross-section of the barriers 61 has a rectangular shape, so that the barriers 61 are very well capable of hindering a fluid flow.

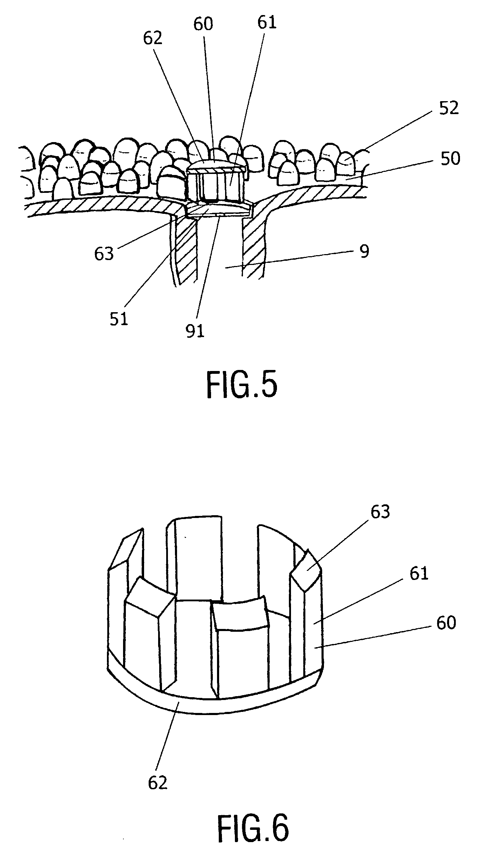

End portions 63 of the barriers 61 are positioned at an imaginary circle, wherein the diameter of this imaginary circle is only slightly smaller than an inner diameter of the recessed central portion 32 of the bottom 31 of the container 30, such that the end portions 63 of the barriers 61 exactly fit in the recessed central portion 32. Figures 5 and 6 provide a good impression of the details of the design of the turbulence generator 60 and the position of the turbulence generator 60 on the container 30.

During a coffee making procedure, hot water is supplied to the brew chamber space 82 by the heater tube 7. Under influence of the pump 4 of the coffee maker 1, the hot water is forced to flow through the coffee pad 20. In this way, coffee is obtained, which flows from a bottom side of the coffee pad 20 in the spaces between the studs 52 of the stud plate 50.

The coffee that is made inside the brew chamber 8 flows over the stud plate 50 in the direction of the outlet hole 91. On the way to the outlet hole 91, the coffee flow encounters the studs 52 of the stud plate 50. It may be true that the coffee flow is hindered by the studs 52, but due to the cylindrical design of the studs 52, the influence of the studs 52 on the flow is as little as possible, and the coffee flow remains a generally smooth flow. However, the coffee flow encounters the turbulence generator 60 as a last item before it reaches the recessed central portion 32 and the outlet hole 91 arranged in this portion 32. As a consequence of the encounter with the barriers 61 of the turbulence generator 60, turbulence is generated in the coffee flow. Due to the fact that the coffee flow enters the nozzle 9 as a turbulent flow, a rough coffee jet is obtained, which leads to the formation of relatively large bubbles in the foam chamber 10, whereby a relatively large foam layer having relatively large bubbles is obtained on the coffee that is received from the coffee maker 1 in a cup or the like.

The characteristics of the foam layer are closely related to the characteristics of the hindrance experienced by the coffee flow on the way to the nozzle 9. By adapting the design of obstacles that are positioned in the way to the nozzle 9, especially of obstacles that are closest to the outlet hole 91 giving access to the nozzle 9, the characteristics of the foam are adapted. In the above-described example, the studs 52 are designed such as to hinder the coffee flow as little as possible. However, it is also possible that the studs 52 are designed such as to act as turbulence generating means on the coffee flow. All studs 52 may be designed to be turbulence generating means, but it is also possible that only a portion of the studs 52, in particular the portion comprising studs 52 that are positioned closest to the outlet hole 91, is designed in this way.

In case a user wants to use the coffee maker 1 one time for making plain coffee, i.e. coffee having a small foam layer, and another time for making cappuccino or another coffee variant having a large foam layer, it is advantageous if the user is capable of adapting the geometry of the container 30, in particular the geometry of the obstacles encountered by coffee in the brew chamber 8 on its way to the nozzle 9, to the desired application. This may be realized in a number of different ways. In the following, three possibilities will be mentioned.

In the first place, it is possible that the user has more than one container 30 to his disposal, wherein one of the containers 30 comprises the turbulence generator 60, and wherein another of the containers 30 does not comprise the turbulence generator 60. The user adapts his choice of the container 30 to the desired application. In the second place, it is possible that the stud plate 50 is detachably arranged in the container 30, and that the user has various stud plates 50 at his disposal, wherein one stud plate 50 comprises the turbulence generator 60, and wherein another stud plate 50 does not comprise the turbulence generator 60. In the third place, it is possible that the turbulence generator 60 itself is detachably arranged to the container 30. For example, the turbulence generator 60 may be connected to the container 30 by means of a click connection, which is brought about when the end portions 63 of the barriers 61 of the turbulence generator 60 are pressed in the central hole 51 in the stud plate 50 and/or the recessed central portion 32 of the bottom 31 of the container 30, and which is cancelled when the user slightly presses the barriers 61 towards each other. In that case, it is important that the turbulence generator 60 comprises a material that is somewhat resilient.

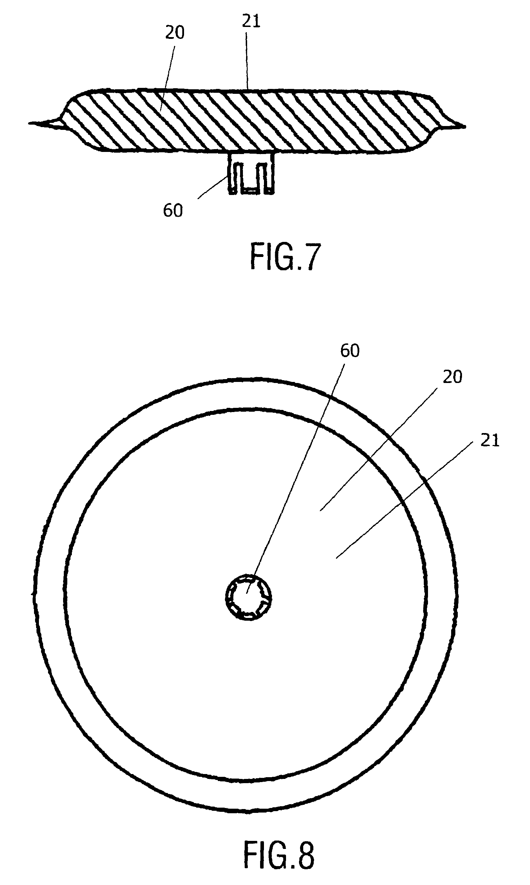

Another possibility that lies within the scope of the present invention is that the turbulence generator 60 is not incorporated in the coffee maker 1, but that the turbulence generator 60 is attached to the coffee pad 20. A coffee pad 20 comprising the turbulence generator 60 is shown in figures 7 and 8. An important advantage of the application of a coffee pad 20 having the turbulence generator 60 is that the coffee maker 1 does not need to be adjusted to the desired coffee variant. Instead, the coffee pad 20 itself provides the means needed for conditioning the coffee in the way it has to be conditioned. An additional advantage is that mistakes of the user are excluded.

The coffee pad 20 is shaped as a pouch having a circular circumference. The coffee pad 20 comprises an envelope 21, which is permeable to water, and a quantity of ground coffee, arranged in a space enclosed by the envelope 21. In case the coffee pad 20 is suitable to be used in a process of making cappuccino, the coffee pad 20 also comprises a quantity of milk powder or other suitable milky particles.

The turbulence generator 60 is centrally attached to one side of the coffee pad 20. Naturally, when the coffee pad 20 is placed in the container 30 in the coffee maker 1, the side where the turbulence generator 60 is has to face down. As a result of the central location of the turbulence generator 60, it is possible to position the turbulence generator 60 such as to surround the outlet hole 91 in the container 30. Moreover, the turbulence generator 60 may be partially fit in the central hole 51 in the stud plate 50, so that the turbulence generator 60 may additionally serve as centering means for centering the coffee pad 20 with respect to the container 30. This is an advantageous additional function of the turbulence generator 60, as it is important that the coffee pad 20 is properly positioned in the container 30 in view of preventing leakage and/or a distortion of the coffee making procedure.

With respect to the position of the turbulence generating means on the coffee pad 20, it is noted that it is important that this position is such that the turbulence generating means are in the vicinity of the outlet hole 91 in the container 30 when the coffee pad 20 is placed in the container 30. When the coffee flow encounters the barriers 61 of the turbulence generator 60 as a last item before it enters the nozzle 9, the effect of the turbulence generator 60 is as large as possible.

It will be clear to a person skilled in the art that the scope of the present invention is not limited to the examples discussed in the foregoing, but that several amendments and modifications thereof are possible without deviating from the scope of the present invention as defined in the attached claims.

For example, it will be clear that the central position of the outlet hole 91 is only shown as a practical example. In case the outlet hole 91 is positioned differently, the position of the turbulence generating means should be different as well. In other words, the position of the turbulence generating means is adjusted to the position of the outlet hole 91, wherein it is important that the turbulence generating means are disposed in the vicinity of the outlet hole 91. In case two or more outlet holes 91 are provided in the container 30, it is preferred that every outlet hole 91 is surrounded by turbulence generating means.

In general, the shape of the coffee pad 20 and the shape of the shown and described components of the coffee maker 1 may differ from the disclosed shape, at least insofar as the different shape does not hinder a proper functioning of the coffee pad 20 and the components.

In the foregoing, a coffee maker 1 is disclosed, which comprises a brew chamber 8 for accommodating a coffee pad 20. During a coffee making procedure, hot water is forced under pressure through the coffee pad 20, whereby the coffee is obtained.

A nozzle 9 is connected to the brew chamber 8 for obtaining a coffee jet. Inside the brew chamber 8, in the vicinity of an outlet hole 91 giving access to the nozzle 9, a turbulence generator 60 is arranged, which is adapted to generating turbulence in a fluid flow. Under the influence of the turbulence generator 60, turbulence is generated in a coffee flow right before it enters the nozzle 9, whereby a rough coffee jet is obtained. In this way, it is possible to obtain a large foam layer on the coffee when it is received in a cup.

Instead of being part of the coffee maker 1, the turbulence generator 60 may also be part of the coffee pad 20.

## Claims

1. Device (1) for making and conditioning a hot beverage such as coffee on the basis of hot water and extractable material, comprising:
- a brew chamber (8) having a brew chamber casing (81) enclosing a brew chamber space (82), which serves for accommodating containing means (20) in which a quantity of the extractable material is present, wherein an inlet hole (41) is arranged in the brew chamber casing (81) for letting in hot water, and wherein an outlet hole (91) is arranged in the brew chamber casing (81) for letting out hot beverage to a nozzle (9) for obtaining a hot beverage jet; and
- turbulence generating means (60) adapted to generating turbulence in a fluid flow, positioned at an inner side of the brew chamber casing (81), in the vicinity of the outlet hole (91), wherein the turbulence generating means (60) comprise a number of barriers (61) suitable for interrupting a fluid flow, disposed at positions around the outlet hole (91), **characterized in that** the turbulence generating means (60) further comprise a disc-shaped closed top (62), wherein the barriers (61) extend from the top (62) like pillars from a roof.

2. Device (1) according to claim 1, wherein a portion (30) of the brew chamber casing (81), in particular a portion (30) comprising the outlet hole (91) and the turbulence generating means (60), is removably arranged.

3. Device (1) according to claim 2, wherein the removably arranged portion (30) of the brew chamber casing (81) is bowl-shaped such as to be capable of receiving and holding the containing means (20), and wherein a handle (33) is attached to the removably arranged portion (30) of the brew chamber casing (81), to facilitate removal of the portion (30) from the device (1) and insertion of the portion (30) in the device (1).

4. Device (1) according to any of claims 1-3, wherein the turbulence generating means (60) are detachably connected to the brew chamber casing (81).

5. Device (1) according to any of claims 1-3, wherein the turbulence generating means (60) are arranged on a detachably arranged portion (50) of a wall of the brew chamber casing (81).

6. Device part (30) which is intended to be used as a removably arranged portion (30) of a brew chamber casing (81) of a device (1) for making and conditioning a hot beverage such as coffee on the basis of hot water and extractable material, in particular a device (1) as claimed in claim 2 or 3, comprising an outlet hole (91) and turbulence generating means (60) adapted to generating turbulence in a fluid flow, positioned in the vicinity of the outlet hole (91), wherein the turbulence generating means (60) comprise a number of barriers (61) suitable for interrupting a fluid flow, disposed at positions around the outlet hole (91), and a disc-shaped closed top (62), wherein the barriers (61) extend from the top (62) like pillars from a roof.

7. Device part (30) according to claim 6, which is bowl-shaped such as to be capable of receiving and holding containing means (20) in which a quantity of the extractable material is present, wherein a handle (33) is attached to the device (30) to facilitate removal of the device part (30) from the device (1) and insertion of the device part (30) in the device (1).

8. Turbulence generating means (60) which are detachably connectable to a brew chamber casing (81) of a device (1) for making and conditioning a hot beverage such as coffee on the basis of hot water and extractable material, in particular a device (1) as claimed in claim 4, comprising barriers (61) suitable for interrupting a fluid flow and a disc-shaped closed top (62), wherein the barriers (61) extend from the top (62) like pillars from a roof.

9. Coffee pad (20), comprising an envelope (21) which is permeable to water, and which is filled with a quantity of extractable material, **characterized by** turbulence generating means (60) adapted to generating turbulence in a fluid flow, arranged at an outside of the envelope (21), wherein the turbulence generating means (60) comprise a number of barriers (61) suitable for interrupting a fluid flow, and wherein the position of the turbulence generating means (60) on the coffee pad (20) is such that the turbulence generating means (60) are positioned in the vicinity of the entrance of a nozzle (9) for obtaining a hot beverage jet when the coffee pad (20) is placed in a beverage maker (1).

10. Coffee pad (20) according to claim 9, wherein the turbulence generating means (60) further comprise a disc-shaped closed top (62), wherein the barriers (61) extend from the top (62) like pillars from a roof.

11. Coffee pad (20) according to claim 9 or 10, which is pouch-shaped, wherein the turbulence generating means (60) are arranged at one side of the coffee pad (20), at a central position.

## Patentansprüche

1. Gerät (1) zur Zubereitung und Aufbereitung eines Heißgetränks, wie z.B. Kaffee, auf der Basis von heißem Wasser und extrahierbarem Material, mit:
- einer Brühkammer (8) mit einem Brühkammergehäuse (81), welches einen Brühkammerraum (82) enthält, der dazu dient, etwas enthaltende Mitteln (20) aufzunehmen, in denen sich eine Menge des extrahierbaren Materials befindet, wobei in dem Brühkammergehäuse (81) eine Einlassöffnung (41) angeordnet ist, um heißes Wasser einzulassen, und wobei in dem Brühkammergehäuse (81) eine Auslassöffnung (91) angeordnet ist, um das Heißgetränk zu einer Düse (9) abzulassen, um einen Heißgetränkstrahl zu erhalten; sowie
- Turbulenzerzeugungsmitteln (60), die so eingerichtet sind, dass sie, auf einer Innenseite des Brühkammergehäuses (81), in der Nähe der Auslassöffnung (91), positioniert, in einem Flüssigkeitsstrom Turbulenz erzeugen, wobei die Turbulenzerzeugungsmittel (60) eine Anzahl von, zum Unterbrechen eines Flüssigkeitsstroms geeignete Barrieren (61) umfassen, die an Stellen um die Auslassöffnung (91) angeordnet sind, **dadurch gekennzeichnet, dass** die Turbulenzerzeugungsmittel (60) weiterhin eine scheibenförmige, geschlossene Oberseite (62) umfassen, wobei sich die Barrieren (61) von der Oberseite (62) wie Säulen von einem Dach erstrecken.

2. Gerät (1) nach Anspruch 1, wobei ein Teil (30) des Brühkammergehäuses (81), insbesondere ein Teil (30) mit der Auslassöffnung (91) und den Turbulenzerzeugungsmitteln (60), entfernbar angeordnet ist.

3. Gerät (1) nach Anspruch 2, wobei der entfernbar angeordnete Teil (30) des Brühkammergehäuses (81) schalenförmig ist, um imstande zu sein, die etwas enthaltenden Mittel (20) aufzunehmen und zu halten, und wobei an dem entfernbar angeordneten Teil (30) des Brühkammergehäuses (81) ein Griff (33) angebracht ist, um das Entfernen des Teils (30) aus dem Gerät (1) sowie das Einsetzen des Teils (30) in das Gerät (1) zu erleichtern.

4. Gerät (1) nach einem der Ansprüche 1-3, wobei die Turbulenzerzeugungsmittel (60) mit dem Brühkammergehäuse (81) abnehmbar verbunden sind.

5. Gerät (1) nach einem der Ansprüche 1-3, wobei die Turbulenzerzeugungsmittel (60) auf einem abnehmbar angeordneten Teil (50) einer Wand des Brühkammergehäuses (81) angeordnet sind.

6. Geräteteil (30), welcher als entfernbar angeordneter Teil (30) eines Brühkammergehäuses (81) eines Geräts (1) zur Zubereitung und Aufbereitung eines Heißgetränks, wie z.B. Kaffee, auf der Basis von heißem Wasser und extrahierbarem Material, insbesondere eines Geräts (1) nach Anspruch 2 oder 3, verwendet werden soll, welcher eine Auslassöffnung (91) und Turbulenzerzeugungsmittel (60) aufweist, die so eingerichtet sind, dass sie, auf einer Innenseite des Brühkammergehäuses (81), in der Nähe der Auslassöffnung, positioniert, in einem Flüssigkeitsstrom Turbulenz erzeugen, wobei die Turbulenzerzeugungsmittel (60) eine Anzahl von Barrieren (61) umfassen, die, an Stellen um die Auslassöffnung (91) angeordnet, geeignet sind, um einen Flüssigkeitsstrom zu unterbrechen, wobei sich die Barrieren (61) von der Oberseite (62) wie Säulen von einem Dach erstrecken.

7. Geräteteil (30) nach Anspruch 6, welcher schalenförmig ist, um imstande zu sein, etwas enthaltende Mittel (20), in denen sich eine Menge des extrahierbaren Materials befindet, aufzunehmen und zu halten, wobei an dem Gerät (30) ein Griff (33) angebracht ist, um das Entfernen des Geräteteils (30) aus dem Gerät (1) sowie das Einsetzen des Geräteteils (30) in das Gerät (1) zu erleichtern.

8. Turbulenzerzeugungsmittel (60), welche mit einem Brühkammergehäuse (81) eines Geräts (1) zur Zubereitung und Aufbereitung eines Heißgetränks, wie z.B. Kaffee, auf der Basis von heißem Wasser und extrahierbarem Material, insbesondere eines Geräts (1) nach Anspruch 4, abnehmbar verbindbar sind, und welche Barrieren (61), die geeignet sind, um einen Flüssigkeitsstrom zu unterbrechen, sowie eine scheibenförmige, geschlossene Oberseite (62) aufweisen, wobei sich die Barrieren (61) von der Oberseite (62) wie Säulen von einem Dach erstrecken.

9. Kaffeepad (20) mit einer Ummantelung (21), die wasserdurchlässig und mit einer Menge von extrahierbarem Material gefüllt ist, **gekennzeichnet durch** Turbulenzerzeugungsmittel (60), die so eingerichtet sind, dass sie, auf einer Außenseite der Ummantelung (21) angeordnet, in einem Flüssigkeitsstrom Turbulenz erzeugen, wobei die Turbulenzerzeugungsmittel (60) eine Anzahl von Barrieren (61) umfassen, die geeignet sind, um einen Flüssigkeitsstrom zu unterbrechen, und wobei die Position der Turbulenzerzeugungsmittel (60) auf dem Kaffeepad (20) so vorgesehen ist, dass die Turbulenzerzeugungsmittel (60) in der Nähe des Eingangs einer Düse (9) positioniert sind, um einen Heißgetränkstrahl zu erhalten, wenn das Kaffeepad (20) in einem Getränkebereiter (1) platziert ist.

10. Kaffeepad (20) nach Anspruch 9, wobei die Turbulenzerzeugungsmittel (60) weiterhin eine scheibenförmige, geschlossene Oberseite (62) umfassen, wobei sich die Barrieren (61) von der Oberseite (62) wie Säulen von einem Dach erstrecken.

11. Kaffeepad (20) nach Anspruch 9 oder 10, welches beutelförmig ist, wobei die Turbulenzerzeugungsmittel (60) auf einer Seite des Kaffeepads (20) in einer mittleren Position angeordnet sind.

## Revendications

1. Dispositif (1) de préparation et de conditionnement d'une boisson chaude, telle que du café, sur la base d'eau chaude et de matière extractible, comprenant :
- une chambre à infusion (8) ayant un boîtier de chambre à infusion (81) enfermant un espace de chambre à infusion (82) qui sert à recevoir des moyens de retenue (20) où une quantité de la matière extractible est présente, où un orifice d'admission (41) est pratiqué dans le boîtier de chambre à infusion (81) de manière à admettre de l'eau chaude et où un orifice de sortie (91) est pratiqué dans le boîtier de chambre à infusion (81) de manière à évacuer la boisson chaude vers une buse (9) afin d'obtenir un jet de boisson chaude ; et
- des moyens de génération de turbulence (60) qui sont adaptés de manière à générer une turbulence dans un flux liquide et qui sont positionnés d'un côté intérieur du boîtier de chambre à infusion (81), à proximité de l'orifice de sortie (91), où les moyens de génération de turbulence (60) comprennent un certain nombre de barrières (61) qui sont appropriées à interrompre un flux liquide et qui sont disposées autour de l'orifice de sortie (91), **caractérisé en ce que** les moyens de génération de turbulence (60) comprennent encore un sommet fermé en forme de disque (62) où les barrières (61) s'étendent à partir du sommet (62) tout comme des piliers d'un toit.

2. Dispositif (1) selon la revendication 1, dans lequel une partie (30) du boîtier de chambre à infusion (81), en particulier une partie (30) comprenant l'orifice de sortie (91) et les moyens de génération de turbulence (60), est disposée d'une manière amovible.

3. Dispositif (1) selon la revendication 2, dans lequel la partie (30) d'une manière amovible disposée du boîtier de chambre à infusion (81) est en forme de cuvette de manière à être capable de recevoir et de maintenir les moyens de retenue (20) et où une poignée (33) est fixée à la partie (30) d'une manière amovible disposée du boîtier de chambre à infusion (81) afin de faciliter l'enlèvement de la partie (30) à partir du dispositif (1) et l'insertion de la partie (30) dans le dispositif (1).

4. Dispositif (1) selon l'une quelconque des revendications précédentes 1 à 3, dans lequel les moyens de génération de turbulence (60) sont d'une manière amovible reliés au boîtier de chambre à infusion (81).

5. Dispositif (1) selon l'une quelconque des revendications précédentes 1 à 3, dans lequel les moyens de génération de turbulence (60) sont disposés sur une partie (50) d'une manière amovible disposée d'une paroi du boîtier de chambre à infusion (81).

6. Pièce de dispositif (30) qui est destinée à être utilisée en tant qu'une partie (30) d'une manière amovible disposée d'un boîtier de chambre à infusion (81) d'un dispositif (1) pour la préparation et le conditionnement d'une boisson chaude, telle que du café, sur la base d'eau chaude et de matière extractible, en particulier un dispositif (1) selon la revendication 2 ou selon la revendication 3, comprenant un orifice de sortie (91) et des moyens de génération de turbulence (60) qui sont adaptés de manière à générer une turbulence dans un flux liquide et qui sont positionnés à proximité de l'orifice de sortie (91) où les moyens de génération de turbulence (60) comprennent un certain nombre de barrières (61) qui sont appropriées à interrompre un flux liquide et qui sont disposées dans des positions autour de l'orifice de sortie (91), et un sommet fermé en forme de disque (62) où les barrières (61) s'étendent à partir du sommet (62) tout comme des piliers d'un toit.

7. Pièce de dispositif (30) selon la revendication 6 qui est en forme de cuvette de manière à être capable de recevoir et de maintenir les moyens de retenue (20) où une quantité de la matière extractible est présente, où une poignée (33) est fixée au dispositif (30) afin de faciliter l'enlèvement de la pièce de dispositif (30) à partir du dispositif (1) et l'insertion de la pièce de dispositif (30) dans le dispositif (1).

8. Moyens de génération de turbulence (60) qui sont susceptibles d'être reliés d'une manière amovible à un boîtier de chambre à infusion (81) d'un dispositif (1) pour la préparation et le conditionnement d'une boisson chaude, telle que du café, sur la base d'eau chaude et de matière extractible, en particulier un dispositif (1) selon la revendication 4, comprenant des barrières (61) qui sont appropriées à interrompre un flux liquide et un sommet fermé en forme de disque (62) où les barrières (61) s'étendent à partir du sommet (62) tout comme des piliers d'un toit.

9. Sachet de café (20) comprenant enveloppe (21) qui est imperméable à l'eau et qui est rempli d'une quantité de matière extractible, **caractérisé par** des moyens de génération de turbulence (60) qui sont adaptés de manière à générer une turbulence dans le flux liquide, qui sont disposés d'un côté extérieur de l'enveloppe (21) où les moyens de génération de turbulence (60) comprennent un certain nombre de barrières (61) qui sont appropriées à interrompre un flux liquide et où la position des moyens de génération de turbulence (20) sur le sachet de café (20) est telle que les moyens de génération de turbulence (60) sont positionnés à proximité de l'entrée d'une buse (9) afin d'obtenir un jet chaud de boisson lorsque le sachet de café (20) est placé dans un appareil de préparation de boissons (1).

10. Sachet de café (20) selon la revendication 9, dans lequel les moyens de génération de turbulence (60) comprennent encore un sommet fermé en forme de disque (62) où les barrières (61) s'étendent à partir du sommet (62) tout comme des piliers d'un toit.

11. Sachet de café (20) selon la revendication 9 ou selon la revendication 10, qui est en forme de poche où les moyens de génération de turbulence (60) sont disposés d'un côté du sachet de café (20) dans une position centrale.
